# EUROPEAN PATENT SPECIFICATION

(11) **EP 0 404 291 B1**
(45) Date of publication and mention of the grant of the patent: **21.09.1994**
(21) Application number: 90300539.5
(22) Date of filing: 18.01.1990
(51) Int. Cl.: G01N 1/12

(54) **Holder for molten metal sampling device**
Haltevorrichtung für einen Probenehmer für Metallschmelzen
Support pour échantillonneur de métal fondu

(30) Priority: 05.05.1989 GB 8910406; 13.09.1989 US 406529; 27.11.1989 US 441289
(43) Date of publication of application: 27.12.1990
(73) Proprietor: EVACUO ENTERPRISES LIMITED, Hamilton Ontario L8L 7T5 (CA)
(72) Inventor: Haughton, Gary H., Burlington, Ontario, L7R 3X4 (CA)
(74) Representative: Silverman, Warren

(56) References cited:
- EP-A- 0 311 261
- GB-A- 1 524 386
- US-A- 3 877 309
- US-A- 4 067 242
- US-A- 4 699 014

## Description

The present invention relates to molten metal sampling devices, especially to such devices with a non-diluting and non-contaminating protection cap and entrance system.

Prior samplers have been designed with a capping and entrance system that melted along with and into the molten material being sampled. This caused a source of undesirable contaminants to flow into the actual sample chamber. The prior method also allowed elements contained in the capping system to cause a diluting effect on similar elements contained in the molten batch material.

The location being sampled may contain extremely low (typically, 10 to 50 ppm) values of certain elements, for example, C, S, Mn, 0₂, H and N, that must be accurately analyzed in order to produce a high quality product. At these minute ranges, any outside contamination or dilution can cause a significant error in accurate analysis.

Patents representative of the prior art in this area are as follows:
U.S. 4,428,245, issued January 31, 1984 to Nakamura et al;
U.S. 4,007,641, issued February 15, 1977 to Kelsey;
U.S. 4,557,152, issued December 10, 1985 to Plessers et al;
U.S. 4,646,578, issued March 3, 1987 to Lawrenz et al;
U.S. 4,170,139, issued October 9, 1979 to Narita et al;
U.S. 4,250,753, issued February 17, 1981 to Collins;
U.S. 4,140,019, issued February 20, 1979 to Falk;
U.S. 4,112,772, issued September 12, 1978 to McDevitt;
U.S. 4,037,478, issued July 26, 1977 to Cure;
U.S. 4,002,073, issued January 11, 1977 to Collins;
U.S. 3,332,288, issued July 24, 1967 to Mladenovich;
U.S. 3,693,449, issued September 26, 1972 to Collins;
U.S. 4,051,732, issued October 5, 1979 to Falk;
U.S. 3,859,857, issued January 14, 1975 to Falk;

In our European Patent Application No.EP-A-311261, there is proposed a novel capping and entrance system that very much reduces contamination or dilution of the obtained sample. A cap is provided, which is rapidly released from the sampling device upon immersion in the molten metal, and simply floats away.

However, even with the improvement provided by my earlier invention, there remains a slight risk that small portions from the slag layer can be carried down to the region of the sampling device as the latter is plunged downwardly through the slag.

Accordingly, an object of one aspect of this invention is to further decrease the risk of contamination or dilution of an obtained sample.

In a general way, this object is achieved by providing an additional protective cover around the outside of the sampler, the additional protective cover being of a material which tends to repel slag components. The additional protective cover is a composite unit held together by a suitable clip or wire means, whereby the clip or wire fails upon contact with the molten metal, allowing the components of the additional protective cover to separate and float upwardly. While it may still occur that portions of the slag layer adhere to the outside of the additional protective cover, these same contaminants are carried away from the point of sampling along with the components of the additional protective cover as the latter float upwardly to the surface of the melt.

More particularly, this invention provides a holder for a molten metal sampling device, comprising:
a pipe which is elongated in a given direction, the pipe having an upper portion and a lower portion, the lower portion defining an internal guidance chamber and having an opening lying in a plane making an angle with respect to said given direction, the opening communicating with the guidance chamber, the upper portion being adapted to receive and retain the molten metal sampling device in such a way that molten metal in the guidance chamber can be sampled by the sampling device,
a closure element for said opening, the closure element having a density such that it will seek to float upwardly in the molten metal being sampled,
and a protective cover enclosing said closure element and a lower part of said pipe, the protective cover having at least two separate parts,
and retaining means for holding the separate parts of the protective cover together around the closure element and the lower part of the pipe, the retaining means being adapted to fail upon contact with the molten metal.

Three embodiments of this invention are illustrated in the accompanying drawings, in which like numerals denote like parts throughout the several views, and in which:
Figure 1 is an elevational view of one embodiment of a sampler apparatus constructed in accordance with this invention;
Figure 2 is an axial sectional view through the apparatus of Figure 1;
Figure 3 is an elevational view of the apparatus of Figure 1 with the outside protective cover removed;
Figure 4 is a cross-sectional view taken at the line 4-4 in figure 2;
Figure 5 is a perspective view of one component of this invention;
Figure 6 is an axial sectional view through the second embodiment of a sampler apparatus constructed in accordance with this invention;
Figure 7 is an exploded view of the apparatus shown in Figure 6, illustrating the configuration of the protective cover;
Figure 8 is an elevational view of one component of the embodiment shown in Figure 6;
Figure 9 is a perspective view illustrating one way in which the item of Figure 8 can be manufactured;
Figured 10 is an elevational view of a further embodiment of the sampler apparatus constructed in accordance with this invention; and
Figure 11 is an exploded perspective view of the apparatus shown in Figure 10.

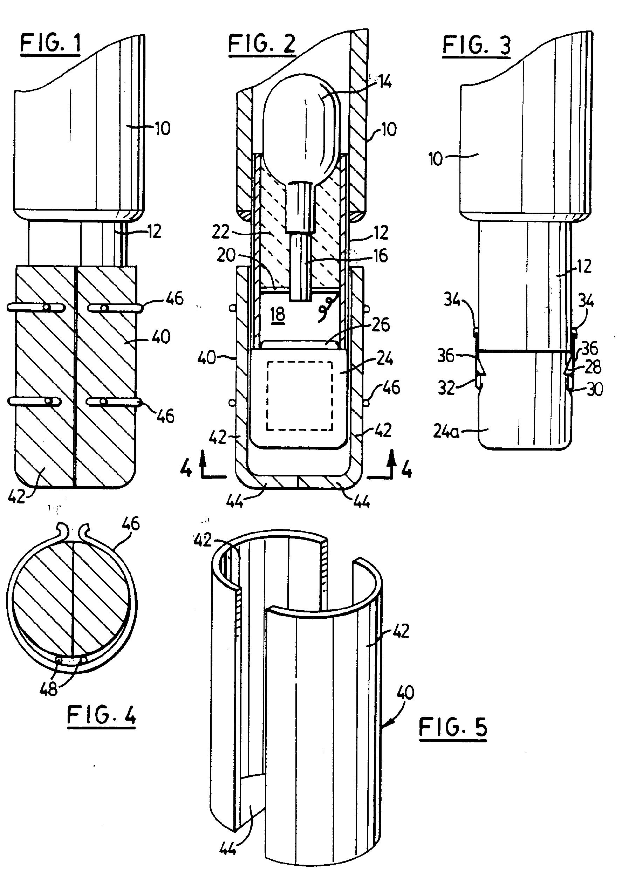

Attention is first directed to Figures 1, 2 and 3, which show an external cardboard cylinder 10 with an open bottom end into which partly projects an internal pipe 12 which may be made of alumino silicate reinforced with fiberglass tape. Alternatively, the pipe 12 may be made of Mullite (3Al₂O₃.2SiO₂) coated with a Boron Nitride Lubricoat, to discourage liquid slag from adhering to the tube. The pipe 12 is square-cut at both ends. Within the upper end is lodged a "lollipop"-shaped sampler 14 of known construction which communicates with a tube 16 which is open at the bottom to allow molten metal to enter the sampler 14 after it has entered a chamber 18 lying within the pipe 12 but below a partition 20. Between the partition 20 and the upper end of the internal pipe 12 is provided refractory material 22 or the equivalent, which has the effect of securing the sampler 14 in place. The open bottom end of the pipe 12 is closed by a cap 24 which may be of alumino silicate reinforced with fiberglass tape. Alternatively, the cap 24 may be made of Mullite (3Al₂O₃.2SiO₂) coated with Boron Nitride. This item may be either solid or hollow (the hollowness is shown by the broken lines in Figure 2), and includes an upward protuberance 26 which registers within the open bottom end of the inner pipe 12.

Figure 3 shows a slightly different configuration for the cap, indicated at 24a. The cap 24a includes two surrounding grooves at 28 and 30, which between them define an outwardly projecting flange 32. Small eyelets 34 at opposite sides of the inner pipe 12 (Figure 3) each secure one end of a wire 36 which engages a suitable opening in the flange 32. Shortly after the cap 24a contacts the molten metal, the wires 36 fail by melting, allowing the cap 24a to float freely away, thus allowing molten metal into the chamber 18 (Figure 2). It is to be understood that the cap 24 in Figure 2 would be secured by some analogous method to that described with respect to Figure 3.

As an alternative to the use of wires 36 shown in Figure 3, it is possible to employ fiberglass tape approximately one inch wide to join and seal the parts together. It has been found that the use of tape is less expensive than the use of wires, and functions quite satisfactorily.

In Figure 1 there is shown an outer protective cover 40 which is seen in Figure 5 to include two semi-cylindrical side wall portions 42, each with a semi-circular bottom wall 44 (only one visible in Figure 5). The two-part protective cover 40 is adapted snugly to surround the cap 24 and a lower portion of the inner pipe 12. The two portions of the outer protective cover 40 are shown to be held in place (in the embodiment illustrated) by two spring clips 46.

Preferably, as shown in Figure 4, each clip 46 is held in spaced relation away from the outer surface of the protective cover 40 by a pair of protuberances 48. This allows the melt to fully surround at least a portion of each spring clip 46, thus melting the clip more readily upon entry into the melt, whereby the two halves of the outer protective cover 40 spread apart and drift up to the surface of the melt.

It has been found that the provision of the outer protective cover 40 virtually eliminates the risk that slag components will remain close to the bottom of the pipe 12 during the taking of the sample.

In one form of this invention, the two-part outer protective cover 40 may be made of alumino silicate reinforced with fiberglass tape. Alternatively, these parts may be made of Mullite coated with Boron Nitride. On the basis of trials for testing purposes, it is believed that the alumina silicate tends to repel contaminants and to discourage the sticking of slag components to its outer surface.

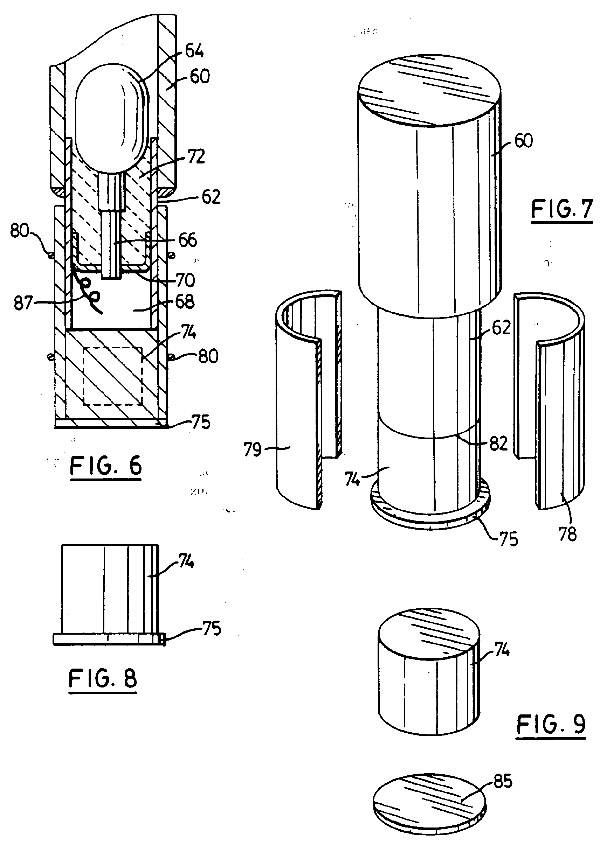

Attention is now directed to Figures 6-9, for a description of the second embodiment of this invention.

As with the first embodiment, the apparatus shown in Figure 6 includes an external cardboard cylinder 60 with an open bottom end into which partly projects an internal pipe 62 which may be made either of alumino silicate reinforced with fiberglass tape, Mullite coated with a Boron Nitride Lubricoat, or any equivalent material. The pipe 62 is square-cut at both ends. Within the upper end is lodged a "lollipop"-shaped sampler 64 essentially the same as the sampler 14 shown in Figure 2. The sampler 64 communicates with the tube 66 which is open at the bottom to allow molten metal to enter the sampler 64 after it has entered a chamber 68 lying within the pipe 62 but below a partition element 70. Between the partition element 70 and the upper end of the internal pipe 62 is provided refractory material 72 or the equivalent, which secures the sampler 64 in place. The open bottom end of the pipe 62 is closed by a cap 74 which may be made of alumino silicate reinforced with fiberglass tape. Alternatively, the cap 74 may be made of Mullite coated with Boron Nitride. The cap 74 may be either solid or hollow.

Figures 6 to 9 show the cap 74 to be essentially a right circular cylinder having an outwardly projecting circumferential ledge 75. The cap 74 is intended to be retained in place against the bottom end of the pipe 62 by the same means already described with reference to Figure 3 (but not illustrated in Figures 6-9). Alternatively, and as mentioned earlier in connection with the first embodiment, it would be possible to employ fiberglass tape approximately one inch wide to join and seal the pipe 62 and the cap 74.

The second embodiment further incorporates a protective cover comprising two similar halves 78 and 79, each half consisting of a semi-cylindrical side wall configured in such a way that, when fitted against the pipe 62 and the cap 74, the lower edges of the halves 78 and 79 can lie in juxtaposition against the ledge 75. this is clearly illustrated in Figure 6.

As seen in Figure 6, the halves 78 and 79 can be secured in place by circumferential C-clips 80, or any other suitable provision. It is to be understood that, upon plunging the apparatus downwardly into the melt, the clips 80 would melt and allow the halves 78 and 79 to separate and float upwardly to the top of the melt.

In the event that slag components adhere to the outside of the halves 78 and 79 during passage through the slag layer, such adhering material will be carried upwardly and away from the junction 82 between the caps 74 and the pipe 62. Thus, when the junction 82 opens, due to the fact that the cap 74 is released and floats upwardly, no slag or slag components will contaminate the molten metal entering the chamber 68 (see Figure 6) within the bottom of the pipe 62.

In a manner similar to that shown in Figure 4 in connection with the first embodiment, the C-clips 80 of Figure 6 may, at one portion of the periphery, be held in spaced relation away from the outer surface of the halves 78 and 79, thus allowing the molten metal to melt the clips 80 more readily upon entry into the melt. This spacing-away of the C-clips 80 has not been illustrated, in order to avoid needless duplication.

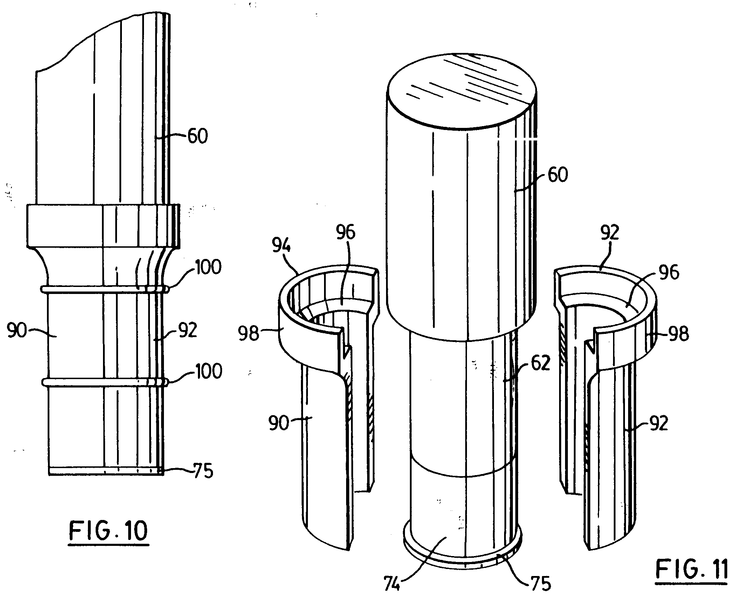

Figure 9 shows one way in which the cap 74 can be manufactured. In Figure 9, a disc 85 is glued or otherwise adhered to the bottom of a right circular cylinder 74, with the disc 85 effectively providing the ledge 75 at its outer periphery.

In Figure 6, the chamber 68 is seen to enclose a thin aluminum wire 87, for the purpose of "killing" the entering molten steel by removing oxygen therefrom. Those skilled in this art will be fully familiar with such provision.

Attention is now directed to Figures 10 and 11, showing a further embodiment. As seen in Figure 11, the external cardboard cylinder 60, the internal pipe 62, the cap 74 and all of the internal portions within these members, remain the same as those shown in Figure 7 (and have the same numerals). The cap 74 has the outwardly projecting circumferential ledge 75, again as pictured in Figure 7.

In the embodiment shown in Figures 10 and 11, the protective cover comprises two similar halves 90 and 92, each half consisting of a semi-cylindrical side wall portion in the lower part, with an integral expanded portion 94 at the top, adapted to receive snugly the lower end of the external cardboard cylinder 60. As is particularly illustrated in Figure 11, each of the halves 90 and 92 incorporates an internal, outwardly projecting step 96 and an upstanding ring portion 98 at the outer edge of the step 96. The outer wall of the lower cylindrical portion, in each case, curves smoothly outwardly and upwardly to meet the bottom of the outer surface of the ring portion 98.

Figure 10 is a view similar to that of Figure 1, but corresponding to Figure 11. In Figure 10, two C-clips 100 are provided to hold the halves 90 and 92 in place until the sampling device has been immersed in the melt. At that point the C-clips 100 melt, allowing the halves 90 and 92 to float upwardly and away from the remainder of the structure. The cap 74 is then released in the same manner as described earlier in connection with the other figures, allowing a sample to be taken. It will be appreciated that the provision of the upper portion of the halves 90 and 92 allows a greater degree of isolation at the sample-taking location, thus further ensuring that no contamination will take place.

## Claims

1. A holder for a molten metal sampling device, which includes a pipe (12, 62) elongated in a given direction, the pipe (12, 62) having an upper portion and a lower portion, the lower portion defining an internal guidance chamber (18, 68) and having an opening lying in a plane making an angle with respect to said given direction, the opening communicating with the guidance chamber (18, 68), the upper portion being adapted to receive and retain the molten metal sampling device (14, 64) in such a way that molten metal in the guidance chamber (18, 68) can be sampled by the sampling device (14, 64), a closure element (24, 74) for the opening, the closure element (24, 74) having a density such that it will seek to float upwardly in the molten metal being sampled,
characterized in that:
the device further includes a protective cover (40) enclosing the closure element (24, 74) and a lower part of the pipe (12, 62), the protective cover (40) having at least two separate parts (42, 78, 79), and retaining means (46, 80) for holding the separate parts of the protective cover (40) together around the closure element (24, 74) and the lower part of the pipe (12, 62), the retaining means (46, 80) being adapted to fail upon contact with the molten metal.

2. The holder claimed in claim 1, in which said protective cover (40) comprises two similar halves (42; 78, 79; 90, 92) constituting said parts.

3. The holder claimed in claim 1, in which said pipe (12) and said closure element (24) are both cylindrical, are coaxial and have substantially the same diameters, and in which the protective cover (40) comprises two similar halves constituting said parts, each half having a semi-cylindrical side wall (42) and a semi-circular bottom wall (44).

4. The holder claimed in claim 1 or 2, in which said pipe (62) and said closure element (74) are both cylindrical, are coaxial and have substantially the same diameters, the closure element further having an outwardly projecting circumferential ledge (75) remote from the pipe, and in which the protective cover comprises two similar halves constituting said parts, each half having a semi-cylindrical side wall (78, 79) of which one end lies in juxtaposition against said ledge (75).

5. The holder claimed in claim 4, in which said pipe (62) is received within an external hollow cylindrical member (60), and in which each half (90, 92) of the protective cover has an enlarged portion (94) at the top which snugly surrounds the lower portion of the cylindrical member (60), thus fully covering the portion of the pipe not received within the cylindrical member.

6. The holder claimed in claim 3, 4 or 5, in which said retaining means is constituted by a metallic element (46; 80; 100) at least partly surrounding the protective cover, the metallic element having at least one location where it is held spaced away from the protective cover, whereby the metallic element will fail by melting at said at least one location.

7. The holder claimed in claim 6, in which the closure element (24a) is held against said opening by a further retaining means (36) which is adapted to fail upon contact with the molten metal.

8. The holder claimed in claim 7, in which said further retaining means is a further metallic element, said further metallic element having at least one location where it is held spaced away from the closure element, whereby said further metallic element will fail by melting at said at least one location.

9. The holder claimed in any preceding claim, in which said plane is substantially perpendicular to said given direction.

10. The holder claimed in any one of claims 1 to 8, in which said plane is substantially perpendicular to the common axis of the pipe and the closure element.

## Patentansprüche

1. Für eine Metallschmelzen-Probenehmervorrichtung einen Halter, umfassend
ein Rohr (12, 62), das in einer gegebenen Richtung verläuft, mit einem oberen Abschnitt; einem unteren Abschnitt, der eine innenliegende Leitkammer (18, 68) bestimmt; und einer Öffnung in einer Ebene, die im Winkel zur gegebenen Richtung steht und mit der Leitkammer (18, 68) in Verbindung steht; wobei zur Aufnahme und Halterung des Metallschmelzen-Probenehmers (14, 64) der obere Abschnitt so ausgelegt ist, daß mit dem Probenehmer (14, 64) die Metallschmelze in der Leitkammer (18, 68) genommen werden kann; sowie
für die Öffnung ein Verschlußelement (24, 74), das eine solche Dichte hat, daß es versucht, in der zu nehmenden Metallschmelze nach oben zu schwimmen,
dadurch gekennzeichnet, daß die Vorrichtung zudem eine Schutzabdeckung (40) besitzt, die das Verschlußelement (24, 74) und den unteren Abschnitt vom Rohr (12, 62) umgibt;
daß die Schutzabdeckung (40) mindestens zwei separate Teile (42, 78, 79) besitzt;
daß eine Halteeinrichtung (46, 80) die separaten Teile der Schutzabdeckung (40) um das Verschlußelement (24, 74) und den unteren Abschnitt des Rohrs (12, 62) zusammenhält; und
daß die Halteeinrichtung (46, 80) so ausgelegt ist, daß sie bei Kontakt mit der Metallschmelze versagt.

2. Halter nach Anspruch 1, wobei die Schutzabdeckung (40) zwei ähnliche Hälften (42; 78, 79; 90, 92), die diese Teile bilden, besitzt.

3. Halter nach Anspruch 1, wobei das Rohr (12, 62) und das Verschlußelement (24) beide zylindrisch und koaxial sind und im wesentlichen gleiche Durchmesser besitzen; die Schutzabdeckung (40) zwei ähnliche Hälften besitzt, die die Teile bilden, wobei jede Hälfte eine halbzylindrische Seitenwand (42) und eine halbzylindrische Bodenwand (44) hat.

4. Halter nach Anspruch 1 oder 2, wobei das Rohr (62) und das Verschlußelement (74) beide zylindrisch sind und koaxial und im wesentlichen gleiche Durchmesser haben; das Verschlußelement zudem einen vom Rohr weg nach außen vorstehenden, kreisförmigen Anschlag (75) besitzt; die Schutzabdeckung zwei ähnliche Hälften besitzt, die die Teile bilden, und jede Hälfte eine halbzylindrische Seitenwand (78, 79) hat, wovon ein Ende den Anschlag (75) beanschlagt.

5. Halter nach Anspruch 4, wobei das Rohr (62) in einem äußeren, hohlzylindrischen Teil (60) aufgenommen ist und jede Hälfte (90, 92) der Schutzabdeckung an der Spitze einen erweiterten Abschnitt (94) hat, der vom Zylinderteil (60) den unteren Abschnitt bündig umgibt, so daß der Abschnitt des Rohrs, der nicht im zylindrischen Teil ist, vollständig abgedeckt ist.

6. Halter nach Anspruch 3, 4 oder 5, wobei die Halteeinrichtung gebildet wird von einem Metallbauteil (46; 80; 100), das die Schutzabdeckung zumindest teilweise umgibt und wenigstens eine Stelle hat, die von der Schutzabdeckung beabstandet ist, so daß das Metallbauteil, wenn es an mindestens einer Stelle schmilzt, versagt.

7. Halter nach Anspruch 6, wobei das Verschlußelement (24a) von einer weiteren Halteeinrichtung (36), die so eingerichtet ist, daß sie bei Kontakt mit der Metallschmelze versagt, gegen die Öffnung gehalten wird.

8. Halter nach Anspruch 7, wobei die weitere Halteeinrichtung ein weiteres Metallbauteil ist, das wenigstens eine Stelle besitzt, wo es mit Abstand vom Verschlußelement weggehalten ist, so daß das weitere Metallbauteil versagt, wenn es an mindestens einer Stelle schmilzt.

9. Halter nach irgendeinem vorhergehenden Anspruch, wobei die Ebene im wesentlichen senkrecht zur gegebenen Richtung steht.

10. Halter nach irgendeinem der Ansprüche 1 bis 8, wobei die Ebene im wesentlichen senkrecht zur gemeinsamen Achse von Rohr und Verschlußelement steht.

## Revendications

1. Support pour un dispositif de prélèvement d'échantillon de métal fondu, qui comprend un tube (12, 62) allongé dans une direction donnée, le tube (12, 62) comprenant une partie inférieure et une partie supérieure, la partie inférieure définissant une chambre interne de guidage (18, 68) et présentant une ouverture située dans un plan qui fait un angle par rapport à ladite direction donnée, l'ouverture communiquant avec la chambre de guidage (18, 68), la partie supérieure étant apte à recevoir et retenir le dispositif (14, 64) de prélèvement d'échantillon de métal fondu de manière à ce que le dispositif (14, 64) de prélèvement d'échantillon puisse prélever du métal fondu se trouvant dans la chambre de guidage (18, 68), un élément (24, 74) de fermeture de l'ouverture qui a une densité telle qu'il va avoir tendance à flotter dans le métal fondu en cours de prélèvement,
caractérisé en ce que le dispositif comprend en outre un capot protecteur (40) qui enferme l'élément de fermeture (24, 74) et une partie inférieure du tube (12, 62), le capot protecteur (40) comprenant aux moins deux pièces séparées (42, 78, 79), et des moyens de retenue (46, 80) destinés à maintenir ensemble les pièces séparées du capot protecteur (40) autour de l'élément de fermeture (24, 74) et de la partie inférieure du tube (12, 62), les moyens de retenue (46, 80) étant aptes à cesser d'assurer leur fonction lors d'un contact avec le métal fondu.

2. Support selon la revendication 1, dans lequel ledit capot protecteur (40) comprend deux moitiés semblables (42; 78, 79; 90, 92) qui constituent lesdites pièces.

3. Support selon la revendication 1, dans lequel ledit tube (12) et ledit élément de fermeture (24) sont tous deux cylindriques, sont coaxiaux et ont sensiblement le même diamètre, et dans lequel le capot protecteur (40) comprend deux moitiés semblables qui constituent lesdites pièces, chaque moitié ayant une paroi latérale (42) semi-cylindrique et une paroi formant fond (44) semi-circulaire.

4. Support selon la revendication 1 ou 2, dans lequel ledit tube (62) et ledit élément de fermeture (74) sont tous deux cylindriques, sont coaxiaux et ont sensiblement le même diamètre, l'élément de fermeture ayant en outre un rebord (75) en saillie vers l'extérieur sur sa circonférence, loin du tube, et et dans lequel le capot protecteur comprend deux moitiés semblables qui constituent lesdites pièces, chaque moitié ayant une paroi latérale (78, 79) semi-cylindrique dont une extrémité se trouve en juxtaposition contre ledit rebord (75).

5. Support selon la revendication 4, dans lequel ledit tube (62) est logé dans élément extérieur (60) cylindrique et creux, et dans lequel chaque moitié (90, 92) du capot protecteur présente une partie élargie (94) en son sommet qui entoure étroitement la partie inférieure de l'élément cylindrique (60) en recouvrant ainsi totalement la partie du tube qui n'est pas logée dans l'élément cylindrique

6. Support selon la revendication 3, 4 ou 5, dans lequel ledit moyen de retenue est constitué par un élément métallique (46; 80; 100) entourant au moins partiellement le capot protecteur, l'élément métallique ayant au moins un emplacement au niveau duquel il est maintenu espacé du capot protecteur, ce qui fait que l'élément métallique va disparaître par fusion en ledit emplacement au nombre d'au moins un.

7. Support selon la revendication 6, dans lequel l'élément de fermeture (24a) est maintenu contre ladite ouverture par un autre moyen de retenue (36) qui est apte à cesser d'assurer sa fonction lors d'un contact avec le métal fondu.

8. Support selon la revendication 7, dans lequel ledit autre moyen de retenue est un autre élément métallique, ledit autre élément métallique ayant au moins un emplacement au niveau duquel il est maintenu espacé dudit élément de fermeture, ce qui fait que ledit autre élément métallique va disparaître par fusion en ledit emplacement au nombre d'au moins un.

9. Support selon l'une quelconque des précédentes revendications, dans lequel ledit plan est sensiblement perpendiculaire à ladite direction donnée.

10. Support selon l'une quelconque des revendications 1 à 8, dans lequel ledit plan est sensiblement perpendiculaire à l'axe commun du tube et de l'élément de fermeture.
